# NEUE EUROPÄISCHE PATENTSCHRIFT

(11) **EP 0 457 935 B2**
(45) Veröffentlichungstag und Bekanntmachung des Hinweises auf die Entscheidung über den Einspruch: **17.04.1996**
(45) Hinweis auf die Patenterteilung: 01.09.1993
(21) Anmeldenummer: 90109601.6
(22) Anmeldetag: 21.05.1990
(51) Int. Cl.: B60H 1/00, G05G 7/02

(54) **Betätigungsvorrichtung für Bowdenzüge**
Control device for Bowden cables
Dispositif de commande pour câbles Bowden

(43) Veröffentlichungstag der Anmeldung: 27.11.1991
(73) Patentinhaber: SIEMENS AKTIENGESELLSCHAFT, D-80333 München (DE)
(72) Erfinder: Kusuma, Djuanarto, Dipl.-Ing., D-8633 Rödental (DE); Ziegler, Elmar, Dipl.-Ing., D-8637 Ahorn (DE)
(74) Vertreter: COHAUSZ HASE DAWIDOWICZ & PARTNER

(56) Entgegenhaltungen:
- EP-A- 0 149 397
- DE-A- 1 630 655
- DE-A- 3 136 672
- FR-A- 2 502 359
- GB-A- 905 430
- US-A- 4 495 560
- US-A- 4 919 328

## Beschreibung

Die Erfindung bezieht sich auf eine Betätigungsvorrichtung für Bowdenzüge.

Bei einer aus der DE-A 3136672 bekannten Betätigungsvorrichtung für Bowdenzüge, insbesondere für Heizungs- und Lüftungsklappen in Kraftfahrzeugen, wird das Ende jedes Bowdenzuges jeweils an einem Zug- und Druckelement in Form eines Gleitstückes festgelegt, das in einer parallel zur Drehachse des Drehknopfes verlaufendes Führungsnut in einem den Drehknopf aufnehmenden Bediengehäuse linear geführt ist und das über einen Gleitstift in Eingriff mit einem Schraubengang auf der Oberfläche eines Führungszylinders steht, der in dem Bediengehäuse über Lagerzapfen drehbar gelagert und über den Drehknopf betätigbar ist. Sofern im bekannten Fall neben einer ersten eine weitere Luftklappe betätigt werden soll, ist dazu ein weiterer Führungszylinder mit einer weiteren Gleitführung vorgesehen. Die Schraubengänge erstrecken sich jeweils über einen Teilumfangsbereich jedes Führungszylinders.

Durch die GB-A-905 430 ist eine Betätigungsvorrichtung für Bowdenzüge mit einem von einem Drehknopf parallel zu dessen Drehachse bedienbaren Führungszylinder bekannt, dessen Zylinderoberfläche mehrere, sich teilweise kreuzende, über den Umfang des Zylinders in sich geschlossene Führungsnuten aufweist, durch die Mitnahme-Nocken von entlang axialer Schienen in Richtung der Zylinderachse geführter Bowdenzugaufnahmen beim Drehen des Führungszylinders hin- und herbewegt werden können.

Durch die EP-A-0 149 397 ist eine Betätigungsvorrichtung für Bowdenzüge mit von einem Drehknopf senkrecht zu dessen Drehachse betätigbaren Kulissenscheibe mit einer einzigen umlaufenden, stirnseitig offenen Kulissenbahn bekannt, in die einander nahezu gegenüberliegende Mitnahmenocken zweier Kulissenhebel eingreifen, die mit ihrem einen freien Ende in einem gemeinsamen gehäusefesten Schwenkpunkt zwischen den Mitnahmenocken drehbar gelagert und an ihren anderen freien Enden mit je einem Bowdenzug verbunden sind.

Gemäß Aufgabe vorliegender Erfindung kann auf einfache Weise die Betätigung mehrerer Luftklappen auf wesentlich kleinerem Einbauraum und insbesondere in vorteilhafter Weise mit senkrecht zur Drehachse des Drehknopfes gerichtetem Abgangswinkel der Bowdenzüge, insbesondere zur Verstellung von einer Fußraum-Luftklappe, einer Mittelebenen-Luftklappe und einer Defrost-Luftklappe für die Scheibenebene einer Heizungs- und/oder Klimaanlage eines Kraftfahrzeuges dadurch erreicht werden, daß auf einem einzigen Führungszylinder je eine umlaufende, in sich geschlossene Führungsbahn für einen als Bowdenzugmitnahme jeweils vorgesehenen Schwenkhebel für die Fußraum-Luftklappe, die Mittelebenen-Luftklappe und die Defrost-Luftklappe vorgesehen ist. Eine bedienungsleichte Betätigung wird durch je einen Führungsverlauf mit Übergang von einer Öffnungs- in die Schließstellung bzw. von der Schließ- in die Öffnungsstellung jeder Luftklappe bei Betätigung des Drehknopfes bzw. des Führungszylinders in gleichen Drehsinn erreicht.

In weiterer Komfortsteigerung der erfindungsgemäßen Betätigungsvorrichtung ist eine mittelbare Betätigung des Führungszylinders durch den Drehknopf mittels eines zwischengeschalteten Elektromotors vorgesehen, wobei zweckmäßigerweise von dem Drehknopf nur noch ein elektrischer Sollwert auf ein Potentiometer vorgegeben und dann der Elektromotor in Abhängigkeit von den vorgegebenen Sollwert den Führungszylinder antreibt. Die Kompaktheit eines solchen Antriebes kann dadurch weiter gesteigert werden, daß der Elektromotor innerhalb des Führungszylinders angeordnet und zweckmäßigerweise über ein Getrieberad auf seinem Wellenende mittel- oder unmittelbar mit einem umlaufenden Innenzahnkranz an der Innenumfangsfläche des Führungszylinders kämmt.

Die Erfindung sowie weitere vorteilhafte Ausgestaltungen der Erfindung werden im folgenden anhand schematisch dargestellter Ausführungsbeispiele in der Zeichnung näher erläutert; darin zeigen:
- FIG 1: in schematischer Darstellung ein Klimagerät mit einer Fußraum-, einer Mittelebenen- und einer Defrost-Luftklappe,
- FIG 2: in einem Teilausschnitt die Draufsicht auf ein Bediengerät mit einem Führungszylinder zur Bowdenzugbetätigung der Luftklappen gemäß FIG 1,
- FIG 3: die Abwicklung der Oberfläche des Führungszylinders gemäß FIG 2 mit den eingezeichneten drei Führungsbahnen,
- FIG 4: die Vorrichtung gemäß FIG 2 mit mittelbarem Antrieb des Führungszylinders von dem Drehknopf über einen am Bediengerät angeflanschten Elektromotor,
- FIG 5: die Betätigungsvorrichtung gemäß FIG 2 mit einem Antrieb des Führungszylinders von dem Drehknopf mittelbar über einen innerhalb des Führungszylinders angeordneten Elektromotor.

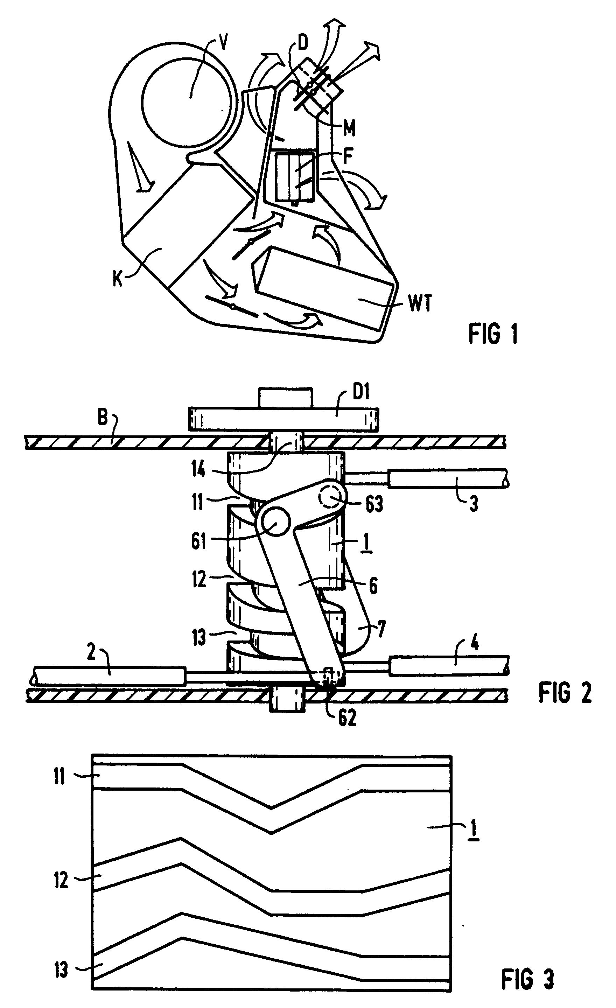

FIG 2 zeigt den Einblick in ein nach oben offenes Bediengerät 1, das am Armaturenbrett eines Kraftfahrzeuges angeordnet ist. An diesem Bediengerät ist neben hier nicht dargestellten Einstellelementen, z.B. für die Temperatur und die Luftmenge eines in FIG 1 schematisch dargestellten Klimagerätes ein Drehknopf D1 angeordnet, der zur Einstellung der Luftverteilung vorgesehen ist. Zur Luftverteilung in den Innenraum des Kraftfahrzeuges werden dazu z.B. eine Fußraum-Luftklappe F, eine Mittelebenen-Luftklappe M und eine Defrost-Luftklappe D für zumindest die vordere Scheibenebene betätigt. Je nach gegenseitiger Stellung dieser Luftklappen kann ein unterschiedlich hoher Luftvolumenstrom in die entsprechenden Kanäle eintreten, der eingangsseitig des Klimagerätes von einem Ventilator V und über einen Verdampfer K bzw. einen Wärmetauscher WT mit unterschiedlichen Kaltluft- bzw. Warmluftanteilen je nach Vorgabe des Temperatur-Einstellelementes gefördert ist.

Die Fußraum-Luftklappe F, die Mittelebenen-Luftklappe M und die Defrost-Luftklappe D werden je nach Stellung des Drehknopfes D1 am Bediengerät B über Bowdenzüge 2 bzw. 3 bzw. 4 betätigt. Die Enden der Bowdenzüge 2 bzw. 3 bzw. 4 sind in Schwenkhebeln 5 bzw. 6 bzw. 7 befestigt, von denen in der Darstellung gemäß FIG 2 nur der Schwenkhebel 6 in voller Draufsicht und der Schwenkhebel 7 in Teilsicht darstellbar sind. Die Schwenkhebel 5 bzw. 6 bzw. 7 sind jeweils um eine Schwenkachse 51 bzw. 61 bzw. 71 verschwenkbar, von denen widerum nur die Schwenkachse 61 des Schwenkhebels 6 in FIG 2 gezeigt ist. Die den jeweiligen Befestigungspunkten 52 bzw. 62 bzw. 72 der Bowdenzüge 2 bzw. 3 bzw. 4 abgewandten Gegenenden der Schwenkhebel 5 bzw. 6 bzw. 7 weisen parallel zu den jeweiligen Schwenkachsen 51 bzw. 61 bzw. 71 verlaufende Führungsstifte 53 bzw. 63 bzw. 73 auf, die in jeweils eine über den Umfang des Führungszylinders 1 verlaufende in sich geschlossene Führungsbahn 11 bzw. 12 bzw. 13 eingreifen und von den Führungsbahnen schienenartig bei Betätigung des Führungszylinders 1 durch den Drehknopf D1 geführt und um die Schwenkachsen derart verschwenkt werden, daß die Bowdenzüge 2 bzw. 3 bzw. 4 in den eingezeichneten Abgangsrichtungen betätigt werden.

FIG 3 zeigt die Abwicklung des Außenumfangs des Führungszylinders 1, aus der die über den gesamten Umfang verlaufenden und in sich geschlossenen Führungsbahnen 11 bzw. 12 bzw. 13 für die Schwenkhebel 5 bzw. 6 bzw. 7 ersichtlich ist; FIG 3 zeigt insbesondere, daß jeweils das linke Ende der Abwicklung mit dem rechten Ende der Abwicklung im Sinne einer geschlossenen umlaufenden jeweiligen Führungsbahn zusammenfallen. Der gegenseitige Verlauf der Führungsbahnen 11 bzw. 12 bzw. 13 zueinander kennzeichnet die jeweilige gegenseitige Stellung der Luftklappen F bzw. M bzw. D und damit die in jedem Einstellpunkt des Drehknopfes D1 spezifische Luftverteilung.

Es dürfte ersichtlich sein, daß in vorteilhafter Weise der erfindungsgemäße Führungszylinder 1 mit seinen mehreren Führungsbahnen und denen als Schwenkhebel ausgeführten Mitnahmen für die Bowdenzüge die Funktion einer ansonsten ein größeren Einbauraum erforderlichen Kulissenscheibe erfüllt und in platzsparender Weise einen Abgangswinkel der Bowdenzüge 2 bzs. 3bzw. 4 ermöglicht, der etwa senkrecht zur Drehachse 14 des Führungszylinders 1 verläuft, wobei durch die über den gesamten Umfang des Führungszylinders umlaufende und in sich geschlossene Führungsbahn bei Betätigung des Drehknopfes D1 in gleicher Drehrichtung sowohl jeweils ein Schließ- als auch ein Öffnungsvorgang bzw. ein Öffnungs- und ein anschließender Schließvorgang möglich ist.

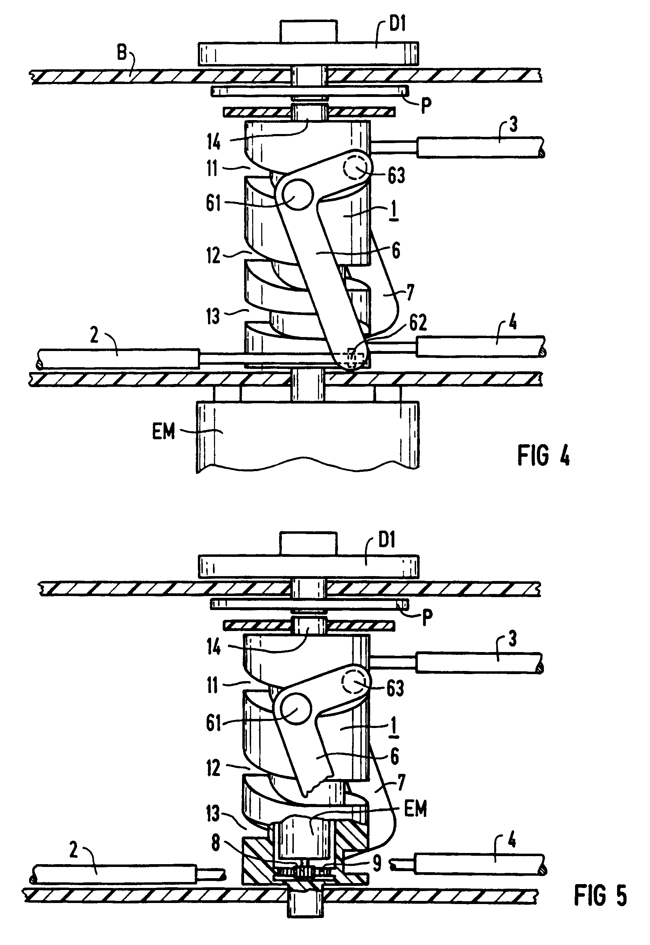

FIG 4, 5 zeigen die mittelbare Betätigung des Führungszylinders 1 über den Drehknopf D1 derart, daß keine unmittelbare Drehmitnahme zwischen der Zylinderachse 14 des Führungszylinders 1 einerseits und dem Drehknopf D1 andererseits besteht, sondern der Führungszylinder 1 von einem angekuppelten Elektromotor EM angetrieben wird, der lediglich seine Sollwertevorgaben von dem Drehknopf D1 erhält; dazu treibt der Drehknopf D1 ein Potentiometer P an, das in hier nicht näher dargestellter Weise mit der Wicklung des Elektromotors EM verbunden ist. Gemäß FIG 4 ist nach einer Ausgestaltung der Erfindung der Elektromotor EM am dem Drehknopf D1 abgewandten Ende des Führungszylinders 1 an dessen Zylinderachse 14 angekoppelt; der Elektromotor EM selbst ist außen an das Bediengerät B angeflanscht.

Gemäß FIG 5 ist in noch kompakterer Weise der Elektromtor EM in den Innenraum des Führungszylinders 1 integriert, und treibt über ein auf seinem Wellenende befestigtes Getrieberad 8 den Führungszylinder 1 dadurch an, daß das Getrieberad 8 mit einer über den Innenumfang des Führungszylinders verlaufenden Innenverzahnung 9 kämmt.

## Patentansprüche

1. Betätigungsvorrichtung für mehrere, unabhängig voneinander betätigbare Bowdenzüge (2 bzw. 3 bzw. 4),
*insbesondere zur Verstellung von Heizungs- und/oder Lüftungsklappen in einem Kraftfahrzeug,*
mittels mehr als zwei voneinander getrennter Führungszylinderführungsbahnen (11 bzw. 12 bzw. 13) in einer Zylindermanteloberfläche für je eine geführte Bowdenzugmitnahme,
wobei auf einem einzigen Führungszylinder (1) mehrere jeweils voneinander getrennte,
in sich geschlossene umlaufende und kreuzungsfreie Führungsbahnen (11 bzw. 12 bzw. 13)
für jeweils einen als Bowdenzugmitnahme vorgesehenen Schwenkhebel (6 bzw. 7 bzw. 8),
*insbesondere für eine Fußraum-Luftklappe (F), eine Mittelebene-Luftklappe (M) bzw. eine Defrost-Luftklappe (D),*
mit einer Führung und Schwenklagerung im Sinne eines im wesentlichen senkrecht zur Führungszylinder-Achse (14) gerichteten Abganges der Bowdenzüge (2 bzw. 3 bzw. 4) angeordnet sind, wobei
je ein Führungsbahnverlauf für den Übergang von einer Öffnungs- in eine Schließstellung bzw. von der Schließ- in die Öffnungsstellung zugeordneter Luftklappen (F bzw. M bzw. D) bei Betätigung eines Drehknopfes (D1) bzw. des Führungszylinders (1) im gleichen Drehsinn vorgesehen ist.

2. Betätigungsvorrichtung nach Anspruch 1, **gekennzeichnet** durch eine Betätigung des Führungszylinders (1) durch einen Drehknopf (D1) mit einer parallel zur Führungszylinder-Achse (14) verlaufenden Drehachse des Drehknopfes (D1).

3. Betätigungsvorrichtung nach einem der Ansprüche 1 bis 2, **gekennzeichnet** durch eine mittelbare Betätigung des Führungszylinders (1) durch den Drehknopf (D1) mittels eines zwischengeschalteten Elektromotors (EM).

4. Betätigungsvorrichtung nach Anspruch 3, **gekennzeichnet** durch einen vom Drehknopf (D1) verstellbaren elektrischen Sollwertgeber (Potentiometer P) für den damit elektrisch verbundenen Elektromotor (EM).

5. Betätigungsvorrichtung nach Anspruch 4, **gekennzeichnet** durch eine Halterung des Potentiometers (P) und/oder des Elektromotors (EM) an einem den Führungszylinder (1) und/oder den Drehknopf (D1) und/oder die Schwenkhebel (6 bzw. 7 bzw. 8) aufnehmenden Bediengerät (B).

6. Betätigungsvorrichtung nach Anspruch 5, **dadurch gekennzeichnet,** daß der Elektromotor (EM) an dem dem Drehknopf (D1) abgewandten Ende des Führungszylinders (1) mit dessen Zylinderachse (14) gekuppelt ist.

7. Betätigungsvorrichtung nach Anspruch 3 und/oder 4, **dadurch gekennzeichnet,** daß der Elektromotor (EM) innerhalb des Führungszylinders (1) angeordnet ist.

8. Betätigungsvorrichtung nach Anspruch 6, **dadurch gekennzeichnet,** daß der Führungszylinder (1) mit einem umlaufenden Innenzahnkranz (9) versehen ist, der mittelbar bzw. unmittelbar mit einem Getrieberad (8) auf einem Wellenende des Elektromotors (EM) kämmt.

9. Betätigungsvorrichtung mit einem am Armaturenbrett eines Kraftfahrzeuges angeordneten, zumindest den Drehknopf (D1) aufnehmenden Bediengerät nach zumindest einem der Ansprüche 1 - 8, **dadurch gekennzeichnet,** daß die Betätigungsvorrichtung für die Bowdenzüge (2 bzw. 3 bzw. 4) und/oder den Elektromotor (EM) und das Potentiometer (P) integrale Bestandteile des Bediengerätes (B) sind.

## Claims

1. An actuating device for a number of independently actuable Bowden cables (2; 3; 4),
more particularly for the adjustment of heating and/or ventilating flaps in a motor vehicle,
by means of more than two guide cylinder guideways (11; 12; 13) provided in a cylinder generated surface for each Bowden cable entraining member guided,
a single guide cylinder (1) being formed with a number of separated self-contained encircling and non-intersecting guideways (11; 12; 13)
for each pivoted lever (6; 7; 8) provided as a Bowden cable entraining member,
more particularly for a foot space air flap (F), a central level air flap (M) and a defrosting air flap (D) respectively,
with a guide and pivoting bearing in the sense of an outlet of the Bowden cables (2; 3; 4) directed substantially perpendicularly to the pivot (14) of the guide cylinder,
a guideway course being provided in each case for the transition from an opening into a closure position and from the closure into the opening position of associated air flaps (F; M; D) on the actuation of a rotary knob (D1) and the guide cylinder (1) in the same direction of rotation.

2. An actuating device according to claim 1, **characterized** by an actuation of the guide cylinder (1) via a rotary knob (D1) having an axis of rotation extending parallel with the pivot (14) of the guide cylinder.

3. An actuating device according to one of claims 1 and 2, **characterized** by an indirect actuation of the guide cylinder (1) via the rotary knob (D1) by means of a serially connected electric motor (EM).

4. An actuating device according to claim 3, **characterized** by an electric required value transmitter (potentiometer P) adjustable by the rotary knob (D1) for the electric motor (EM) electrically connected thereto.

5. An actuating device according to claim 4, **characterized** by the potentiometer (P) and/or the electric motor (EM) being retained on a control unit (B) receiving the guide cylinder (1) and/or the rotary knob (D1) and/or the pivoted lever (6; 7; 8).

6. An actuating device according to claim 5, **characterized in that** the electric motor (EM) is coupled to the pivot (14) of the guide cylinder (1) at the end remote from the rotary knob (D1).

7. An actuating device according to claims 3 and 4, **characterized in that** the electric motor (EM) is disposed inside the guide cylinder (1).

8. An actuating device according to claim 6, **characterized in that** the guide cylinder (1) has a rotating internal toothed rim (9) which meshes indirectly or directly with a gear wheel (8) on one end of the shaft of the electric motor (EM).

9. An actuating device having a control unit which is disposed on the dashboard of a motor vehicle and which receives at least the rotary knob (D1), as set forth in at least one of claims 1-8, **characterized in that** the actuating device for the Bowden cables (2; 3; 4) and/or the electric motor (EM) and the potentiometer (P) are integral components of the control unit (B).

## Revendications

1. Dispositif d'actionnement de plusieurs câbles Bowden (2 ou 3 ou 4), qui peuvent être actionnés indépendamment les uns des autres, en particulier pour le réglage de volets de chauffage et/ou de ventilation d'un véhicule automobile, au moyen de plus de deux pistes de guidage (11 ou 12 ou 13), séparées les unes des autres et ménagées à la surface latérale d'un cylindre en vue respectivement de l'entraînement guidé d'un câble Bowden, dans lequel il est prévu, sur un seul cylindre de guidage (1), plusieurs pistes de guidage (11 ou 12 ou 13), qui sont indépendantes les unes des autres et qui sont refermées sur elles-mêmes et sans croisement, pour respectivement un levier pivotant (6 ou 7 ou 8) prévu en tant qu'élément d'entraînement d'un câble Bowden, notamment pour un volet (F) de guidage de l'air en direction de l'espace situé au niveau des pieds, un volet (M) de guidage de l'air dans le plan médian ou un volet (D) de guidage de l'air de dégivrage, avec un guidage et/ou un tourillonnage en vue d'un départ des câbles Bowden (2 ou 3 ou 4) sensiblement perpendiculairement à l'axe (4) du cylindre de guidage, et il est prévu un tracé de la voie de guidage pour le passage de la position d'ouverture à la position de fermeture ou de la position de fermeture à la position d'ouverture des volets de circulation d'air (F ou M ou D) associés lors de l'actionnement du bouton rotatif (D1) ou du cylindre de guidage (1) dans le même sens de rotation.

2. Dispositif d'actionnement suivant la revendicaton 1, caractérisé par un actionnement du cylindre de guidage (1) au moyen d'un bouton rotatif (D1) possédant un axe de rotation parallèle à l'axe (14) du cylindre de guidage.

3. Dispositif d'actionnement suivant l'une des revendications 1 à 2, caractérisé par un actionnement indirect du cylindre de guidage (1) au moyen du bouton rotatif (D1) par l'intermédiaire d'un moteur électrique (EM) intercalé.

4. Dispositif d'actionnement suivant la revendication 3, caractérisé par un transmetteur électrique de valeurs de consigne (potentiomètre P) réglable au moyen du bouton rotatif (D1), pour le moteur électrique (EM) raccordé électriquement.

5. Dispositif d'actionnement suivant la revendication 4, caractérisé par le montage du potentiomètre (P) et/ou du moteur électrique (EM) sur un appareil de commande (B) qui loge le cylindre de guidage (1) et/ou le bouton rotatif (D1) et/ou les leviers pivotants (6 ou 7 ou 8).

6. Dispositif d'actionnement suivant la revendication 5, caractérisé par le fait que le moteur électrique (EM) est couplé à l'axe (14) du cylindre de guidage (1), à l'extrémité de ce cylindre, située à l'opposé du bouton rotatif (D1).

7. Dispositif d'actionnement suivant la revendication 3 et/ou 4, caractérisé par le fait que le moteur électrique (EM) est disposé à l'intérieur du cylindre de guidage (1).

8. Dispositif d'actionnement suivant la revendication 6, caractérisé par le fait que le cylindre de guidage (1) comporte une couronne dentée intérieure périphérique (9), qui engrène indirectement ou directement avec une roue de transmission (8) montée sur une extrémité de l'arbre du moteur électrique (EM).

9. Dispositif d'actionnement comportant un appareil de commande, qui est disposé sur le tableau de bord d'un véhicule automobile et loge au moins un bouton rotatif (D1), suivant au moins l'une des revendications 1 à 8, caractérisé par le fait que le dispositif d'actionnement pour des câbles Bowden (2 ou 3 ou 4) et/ou le moteur électrique (EM) et le potentiomètre (B) font partie intégrante de l'appareil de commande (B).
